# EUROPEAN PATENT APPLICATION

(11) **EP 4 685 015 A1**
(43) Date of publication of application: **28.01.2026**
(21) Application number: 24382812.6
(22) Date of filing: 24.07.2024
(51) Int. Cl.: B60R 11/04, B60R 11/00

(54) **RETRACTABLE WING ASSEMBLY FOR VEHICLES**

(71) Applicant: Ficosa Automotive, S.L.U., 08232 Viladecavalls (ES)
(72) Inventor: BRAVO CORBACHO, David, 08232 Viladecavalls (Barcelona) (ES); GÓMEZ TIMONEDA, David, 08232 Viladecavalls (Barcelona) (ES)
(74) Representative: Balder IP Law, S.L.

(57) **Abstract**

The invention refers to a retractable wing assembly (1) for vehicles, the assembly (1) comprising: a receptacle (2) having an opening (5) and a casing (3) fitted with a functional device (7), wherein the casing (3) is assembled with the receptacle (2), and it can move through the opening (5) of the receptacle (2). The casing (3) can reciprocate between a retracted position in which a major part of the casing (3) is concealed inside the receptacle (2), and a deployed position in which part of the casing (3) is deployed outside the receptacle (2). The assembly further comprising at least one cover (4, 4') that in the deployed position, the at least one cover (4, 4') is extended with respect to the casing (3) and the casing (3) together with the at least one cover (4, 4'), close at least a portion of the opening (5) of the receptacle (2) to prevent dirt or water from entering into the receptacle (2).

## Description

### TECHNICAL FIELD

An object of the present invention is the provision of a retractable wing assembly for vehicles, for example for a Camera Monitoring System (CMS), which features a slim profile, so that it requires a reduced space inside a vehicle when it is retracted.

### STATE OF THE ART

Retractable wing assemblies for vehicles are known, for example to the used as Camera Monitoring System (CMS) which is an alternative to traditional rear-view mirrors that provides a driver with a rear-view image on a display during normal driving conditions along a road. In these systems, traditional rear-view mirrors are replaced by external cameras located at both sides of the vehicle, placed each camera in a so-called camera wing or camera winglet.

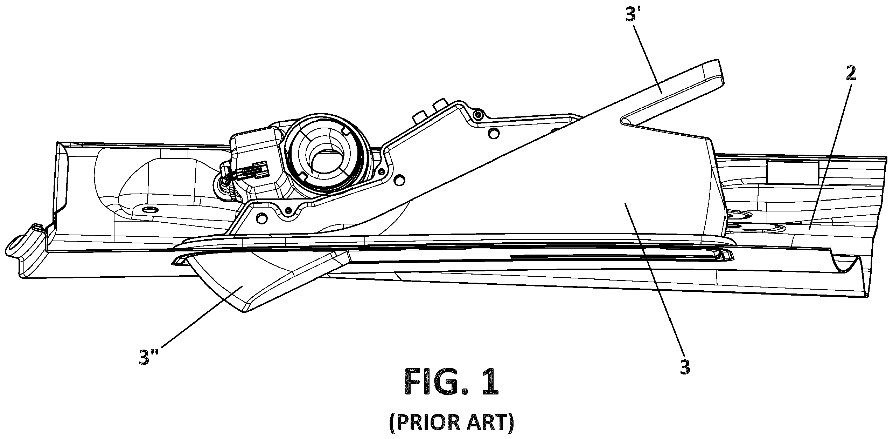

Some of the existing retractable wing assemblies are too bulky or have protruding parts, which require a large room inside a vehicle to be accommodated in the retracted position of the wing assembly. For example, the retractable wing assembly (1) shown in **Figure 1** is formed by a receptacle (2) and a casing (3) assembled with the receptacle (2). The casing (3) can reciprocate between a retracted position and a deployed position in which a major part of the casing is deployed outside the receptacle. The casing (3) has two protruding parts (3', 3"), the first one (3') is formed between casing and receptacle at one side of the rotating shaft, and the second one (3") is formed at the other side of the rotating shaft. Both protruding parts (3', 3") are integrally formed with the casing, and they serve for closing the receptacle in the deployed position of the assembly.

However, as shown in **Figure 1****,** in the retracted position, the second protruding part (3") protrudes outside the external surface of the vehicle's bodywork, and the first protruding part (3') requires a lot of space to be received inside a vehicle, for example inside the front doors of a vehicle, which obliges the vehicle manufacturer to provide room in order to accommodate the wing assembly. This known configuration renders the receptacle bulky and complex in design, as well as leaving a protrusion that breaks the vehicle's bodywork uniformity.

Therefore, there is a demand for retractable wing assemblies that allow a more versatile way to close the open in the deployed position, and that require a reduced space to be accommodated inside a vehicle while keeping the bodywork's uniformity in their retracted position.

### DESCRIPTION OF THE INVENTION

An aspect of the invention refers to a retractable wing assembly for vehicles, wherein the assembly comprises: a receptacle having an opening providing access to the receptacle's interior, and a casing fitted with a functional device, which can be an electric or an electronic device, a non-electric or electronic device such as a mirror glass, or a combination of them. The casing is assembled with the receptacle, and it can move through the opening of the receptacle. Preferably, the casing is pivotally assembled with the receptacle, so that, it can pivot about an axis "X".

The electric or electronic device includes at least one device selected from the following list: a lighting device, a camera, a radar, a lidar, a laser, any type of sensor, an antenna or any combination of those components.

The wing assembly is configured such that the casing can reciprocate between a retracted position in which at least a major part of the casing is concealed inside the receptacle, and a deployed position in which a part of the casing which includes at least a part of the functional device, is deployed outside the receptacle.

The receptacle is a box-like body adapted to be installed in a vehicle's bodywork, such that when installed the receptacle it is inside the vehicle and the receptacle's opening is generally flush with the external surface of the bodywork. In a preferred embodiment of the invention, the receptacle has generally a prismatic rectangular configuration.

According to the invention, the wing assembly further comprises at least one cover movably coupled to the casing, and the wing assembly is further configured such that in the retracted position, the at least one cover is folded towards the casing, and, preferably, a major part of the at least one cover is placed inside the receptacle. In the deployed position, the at least one cover is extended with respect to the casing, and the casing together with the at least one cover, close at least a portion of the opening of the receptacle, to prevent dirt or water from entering into the receptacle, as well as avoiding wind noise. Preferably, the cover is pivotally coupled to the casing.

In the retracted position, a major part of the cover is placed on, over or adjacent to the casing, and in the deployed position a major part of the cover is spaced apart from the casing. In this way, when the wing assembly is in its retracted position, the cover is also retracted and it is placed on the casing or over the casing, so the assembly reduces the use of protruding parts, and the volume required to accommodate the wing assembly inside a vehicle, is small.

The casing has an outer surface which is closing at least a major portion of the opening of the receptacle in the retracted position, and an inner surface, opposite the outer surface, and placed inside the receptacle in the retracted position. Preferably, the outer surface of the casing is flush with a vehicle's bodywork, when the assembly is installed in the vehicle. The at least one cover may be pivotally coupled to the inner or to the outer surface of the casing.

In a first embodiment of the invention, a first cover is pivotally coupled to an inner side of the casing, and the first cover has a main body and preferably a protruding part extending from the main body, and the wing assembly has a first stopper arranged to contact with the protruding part when the casing reaches the retracted position, so as to fold the first cover towards the casing. Additionally, the wing assembly has a second stopper arranged to contact with the protruding part of the cover when the casing reaches the deployed position, so as to extend the first cover with respect to the casing.

Preferably, the wing assembly has a flexible member arranged and configured to press the first cover, both, in the retracted position and in the deployed position, in order to keep the first cover in a stable position and to avoid vibrations or rattle noise while the vehicle is moving.

In a second embodiment of the invention, the wing assembly has a second cover pivotally coupled to the outer side of the casing, such that this second cover closes at least a part of the opening of the receptacle at least in the deployed position, and it is flush with an outer surface of the casing in the retracted position of the wing assembly, and with an outer surface of a bodywork of a vehicle, when the wing assembly is installed in a vehicle and it is in its deployed position.

In a third embodiment of the invention, the wing assembly has the first cover as described above in relation to the first embodiment, and the second cover of the second embodiment pivotally coupled to the outer side of the casing, such that this second cover closes a part of the opening of the receptacle at least in the deployed position, and it may be flush with an outer surface of the casing, and/or with an outer surface of a bodywork of a vehicle, when the wing assembly is installed in a vehicle. Preferably, the second cover closes a part of the opening of the receptacle both, in the retracted and in the deployed positions.

### BRIEF DESCRIPTION OF THE DRAWINGS

To complete the description and in order to provide a better understanding of the invention, a set of drawings is provided. These drawings form an integral part of the description and illustrate embodiments of the invention, which should not be interpreted as restricting the scope of the invention, but just as examples of how the invention can be carried out. The drawings comprise the following figures:
Figure 1.- shows a perspective view from above of a retractable wing assembly of the prior art, in a retracted position.
Figure 2.- shows a first embodiment of the wing assembly of the invention in its retracted position. Figure 2A is a perspective view and Figure 2B is a plan view including an enlarged view of the cover.
Figure 3.- shows the wing assembly of the first embodiment of the invention in its deployed position. Figure 3A is a perspective view and Figure 3B is a plan view including an enlarged view of the cover.
Figure 4.- shows a perspective view of the rear part of the casing of the first embodiment, including an enlarged detail of the coupling of the cover with the casing.
Figure 5.- shows cross-sectional plan views taken at a middle plane of the wing assembly of the first embodiment. Figure 5A shows the assembly in its deployed position, and Figure 5B shows the wing assembly in its retracted position.
Figure 6.- shows the assembly of the first embodiment installed in a portion of the bodywork of a vehicle. Figure 6A shows the wing assembly in its deployed position, and Figure 6B shows the wing assembly in its retracted position.
Figure 7.- shows an exploded view of the assembly of the first embodiment.
Figure 8.- shows two cross-sectional plan views of a third embodiment of the wing assembly. Figure 8A shows the assembly in its deployed position, and Figure 8B shows the assembly in its retracted position.
Figure 9.- shows several views of the embodiment of the previous figure. Figure 9A is a perspective view, Figure 9B is a cross-sectional bottom view taken at plane B-B in Figure 9C, Figure 9C is a front elevational view, and Figure 9D is a plant view.
Figure 10.- shows similar representations than Figures 9A-9D, but in the deployed position.
Figure 11.- shows a perspective view of the second cover (4').
Figure 12.- shows a perspective view of the first cover (4).

### DESCRIPTION OF WAYS OF CARRYING OUT THE INVENTION

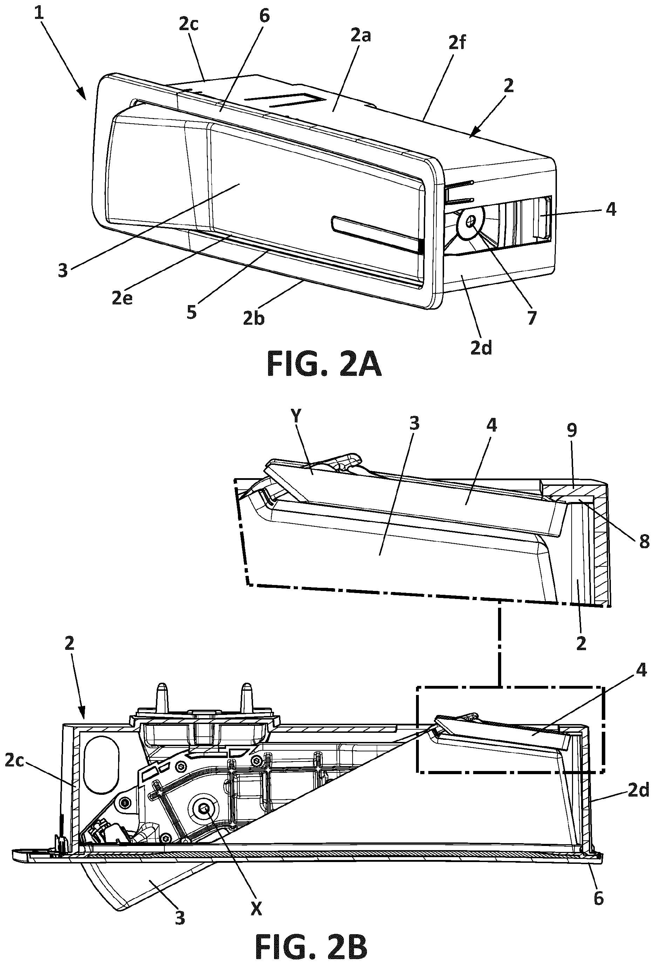

**Figures 2 to 7** show a first embodiment of a retractable wing assembly (1) for vehicles according to the invention in its retracted position. The wing assembly (1) comprises a receptacle (2) having an opening (5) providing access to the receptacle's interior. The receptacle (2) in this embodiment, has generally a prismatic rectangular configuration having top and bottom sides (2a, 2b), left and right sides (2c, 2d), and front and rear sides (2e, 2f), wherein the front side (2e) is open to form the opening (5). The nomenclatures top and bottom refer to the assembly in use, that is, when it is installed in a vehicle, and that the front and rear positions relate to the outside and inside with respect to the vehicle's bodywork.

Around the front side (2e), the receptacle (2) has a frame (6) which surrounds the opening (5). The frame (6) may be an integral part of the receptacle (2) or an independent piece coupled to the receptacle (2).

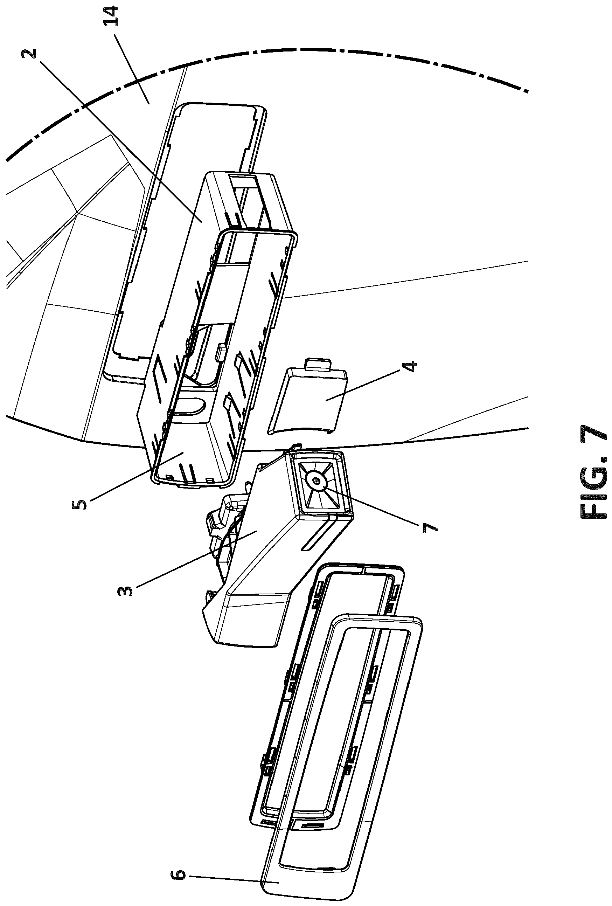

The receptacle (2) is meant to be installed in a vehicle (14), such a major part of the receptacle (2) is placed inside the vehicle, and in a way that the opening (5) provides access to the receptacle's interior from outside the vehicle, as shown for example in **Figure 7****.**

The retractable wing assembly (1) further comprises a casing (3) fitted with a functional device (7), such as: a lighting device, a camera, a radar, a lidar, a laser, a sensor, an antenna, a mirror glass or a combination of these components. In the embodiment shown in the figures, the casing (3) is fitted with a camera.

The casing (3) is assembled with the receptacle (2) in a way that the casing (3) can move through the opening (5) of the receptacle (2), preferably the casing (3) is pivotally mounted with the receptacle (2) about an axis (X).

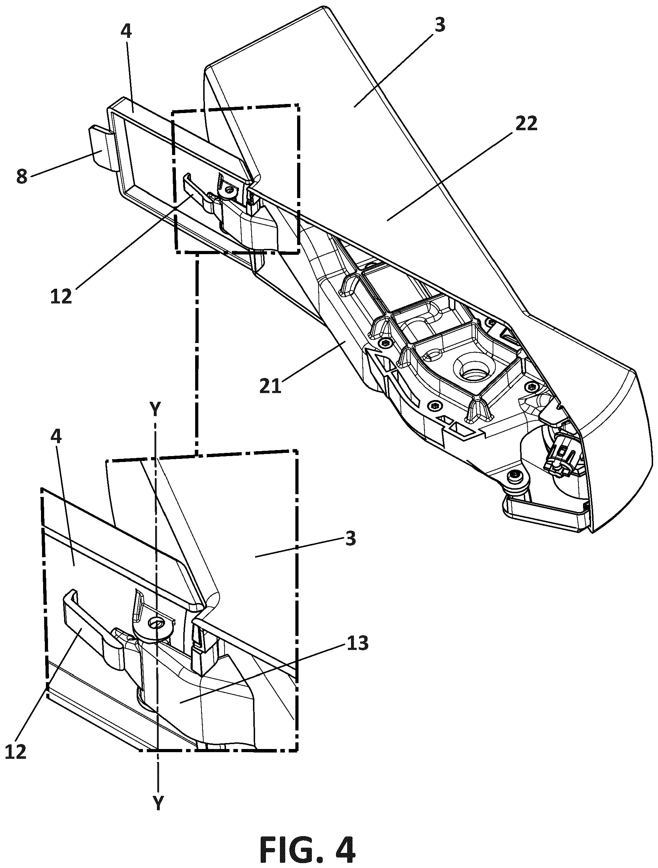

As better shown in **Figure 4****,** the casing (3) is formed by a bracket (21) and a shell (22) supported by the bracket (21), wherein the shell (22) is shaped to provide continuity to the shape of the vehicle's bodywork surface in which the wing assembly (1) is installed.

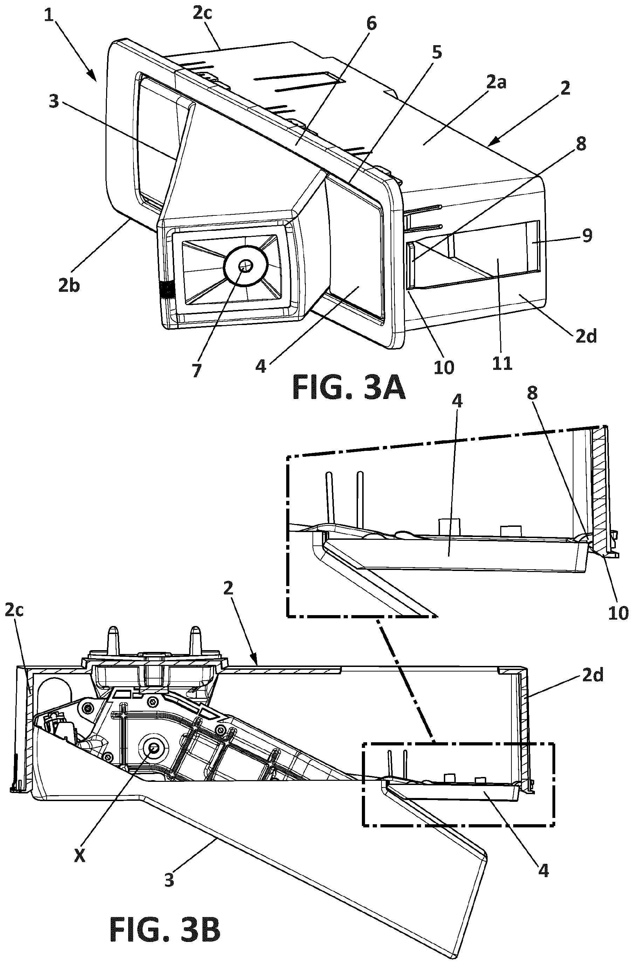

The wing assembly (1) is configured such that the casing (3) can reciprocate between a retracted position shown in **Figures 2A, 2B****,** in which at least a major part of the casing (3) is concealed inside the receptacle (2), and a deployed position shown in **Figures 3A, 3B****,** in which a part of the casing (3), in particular the part inside which the functional device (7) is placed, is deployed outside the receptacle (2).

The retractable wing assembly (1) further comprises a first cover (4) which is pivotally coupled to the casing (3), in particular to a rear side of the same, as better shown in **Figure 4****,** such that the first cover (4) is pivotable about an axis (Y). Additionally, the wing assembly (1) includes a flexible member arranged and configured to press the first cover (4), at least in the deployed position of the assembly (1). In the embodiment represented in the figures, the flexible member is embodied as a first flexible tab (12) integrally formed with the rear side of the first cover (4), such that one end of the flexible tab (12) is joined to the first cover (4) and the other end is a free end.

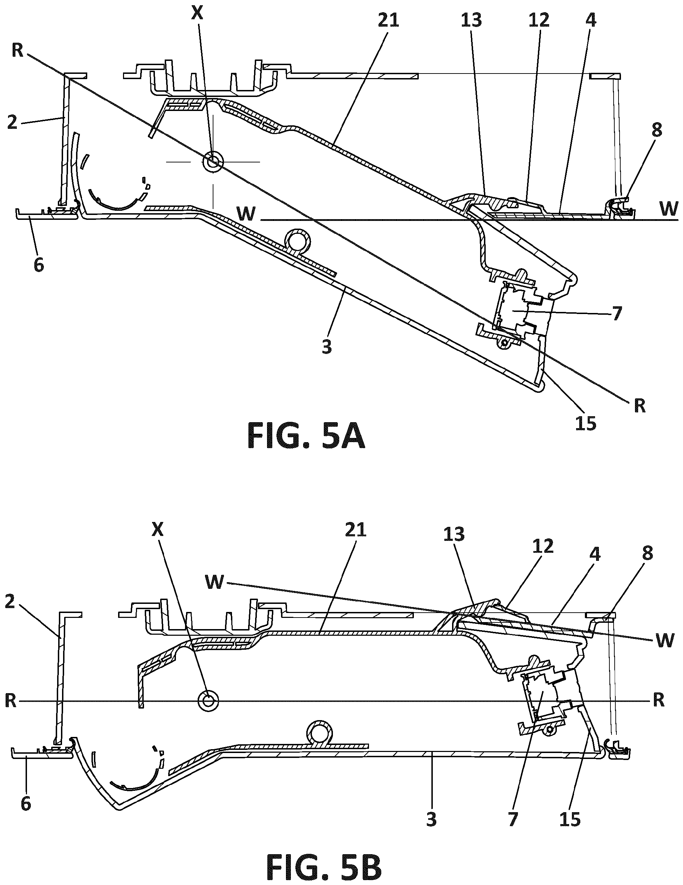

The casing (3) has an arm (13), and the first cover (4) is coupled to this arm (13) to pivot about an axis (Y). As represented in **Figures 4****,** **5A, 5B****,** the arm (13) is also in contact to the free end of the flexible tab (12) of the first cover (4), such that the flexible tab (12) is pushed by the arm (13) to exert force on first cover (4). The arm (13) has the form of a curved tab, and it is integrally formed with the bracket (21) of the casing (3). The arm (13) is in contact with the free end of the flexible tab (12), both in the deployed and retracted position of the casing (3), and due to the flexibility feature of the flexible tab (12), the flexible tab (12) moves from one side of the arm (13) to the other side, as the casing transits from its deployed position to its retracted position, and vice versa, as it can be observed in **Figures 5A, 5B****.** In the deployed position **(****Figure 5A****),** the flexible tab (12) contacts on the rear side of the arm (13), and in the retracted position **(****Figure 5B****),** the flexible tab (12) contacts on the front side of the arm (13), wherein the rear side is the uttermost internal side of the arm with respect to the vehicle.

The retractable wing assembly (1) is configured such that in the retracted position shown in

**Figures 2A, 2B****,** the first cover (4) is folded towards the casing (3), that is, the first cover (4) is placed on, over or adjacent the casing (3), and in the deployed position shown in **Figures 3A, 3B****,** the first cover (4) is extended with respect to the casing (3), that is, a major part of the first cover (4) is spaced apart from the casing, and the casing (3) together with the first cover (4), close the opening (5) of the receptacle (2). In the deployed position, the opening (5) is completely closed, so that dirt or water cannot enter into the receptacle (2), and wind noise is avoided.

The first cover (4) may have a flat main body or a body following an external surface of an adjacent bodywork, so that in the deployed position of the assembly, the opening (5) is completely closed, as better shown for example in **Figure 3A****.**

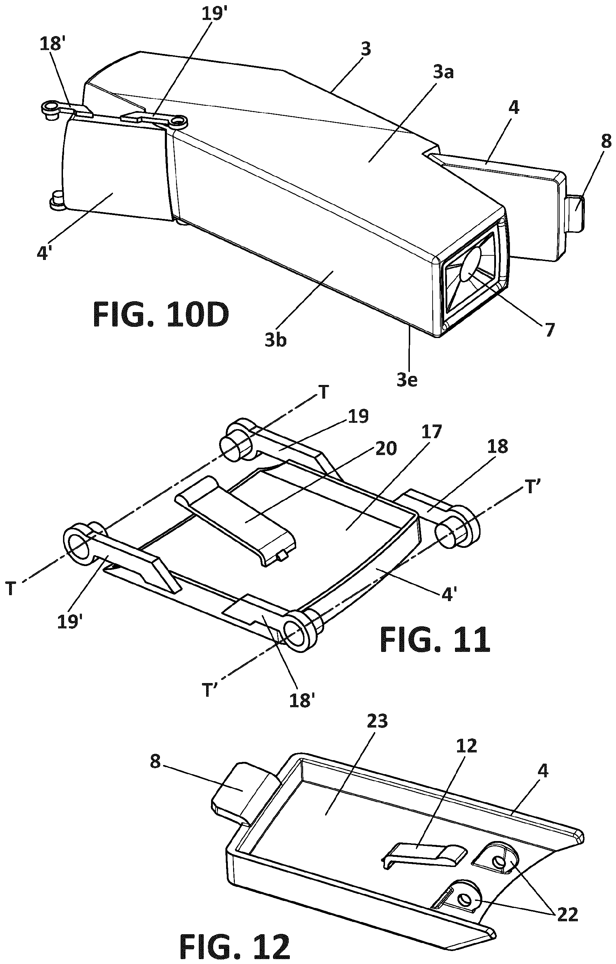

The first cover (4) is represented with more detail in **Figure 12****,** and it is formed by a main part (23) generally flat, and a protruding part (8) in the form of a tongue, and the flexible tab (12) which is integrally formed at one end with the main part (23). The first cover (4) also has two lugs (22) for the coupling of the first cover (4) with the arm (13).

The wing assembly (1) has a first stopper (9) arranged to contact with the first cover (4), in the example, with the protruding part (8), when the casing (3) reaches the retracted position, so as to fold the first cover (4) towards the casing (3), and a second stopper (10) arranged to contact with the first cover (4), in the example, also with the protruding part (8), when the casing (3) reaches the deployed position, so as to extend the cover with respect to the casing (3).

In the exemplary embodiment shown in the figures, the first and second stoppers (9, 10) are formed at the right side (2d) of the receptacle (2). More specifically, the right side (2d) of the receptacle (2) has a window (11), and the first and second stoppers (9, 10) are two opposite edges of that window (11). The protruding part (8) is located inside the window (11) and moves along the window (11), while transiting between the retracted and deployed positions. As represented in **Figures 2A, 2B****,** when the first cover (4) reaches the retracted position, the protruding part (8) contacts with the first stopper (9), thus, it is forced to pivot about axis (Y) towards its folded position. In turn, as represented in **Figures 3A, 3B****,** when the first cover (4) reaches the deployed position, the protruding part (8) contacts with the second stopper (10), thus, it is forced to pivot about axis (Y) towards its extended position.

As shown in **Figure 5A****,** the casing (3) is an elongated body that extends in a direction (R). In turn, a part of the first cover (4) extends in a direction (W). In the deployed position, the direction (W) intersects with the direction (R) at a point between the axis (X) and a free end (15) of the casing (3). In the retracted position, the direction (W) does not intersect with the direction (R) at a point between the axis (X) and a free end (15) of the casing (3) as shown in **Figure 5B****.**

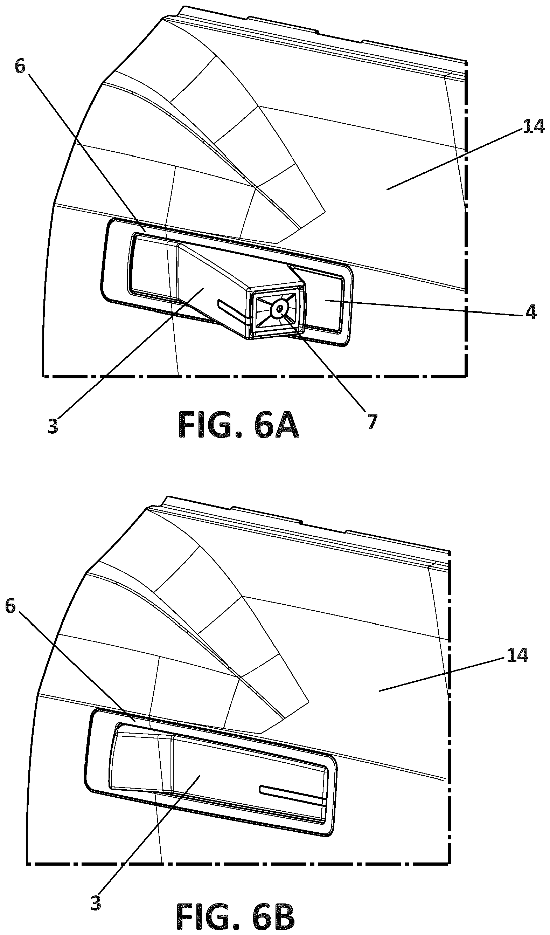

As it can be appreciated from **Figures 6A, 6B****,** in this embodiment the wing assembly (1) is configured such that, when it is installed in a vehicle, the axis (X) is placed inside the vehicle's bodywork. In this embodiment, the axis (X) is vertical to ground and located internally in the vehicle, although in other embodiments the axis (X) may have other directions and locations.

Moreover, the wing assembly (1) is configured such that, when it is installed in a vehicle, in the deployed position the functional device (7) is operative, and it is facing backwards with respect to the forward driving direction of the vehicle.

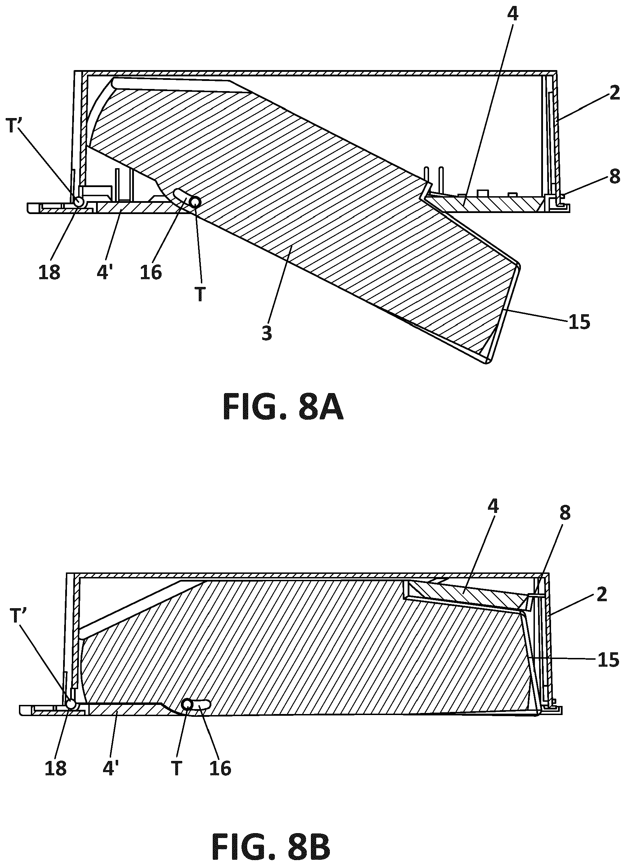

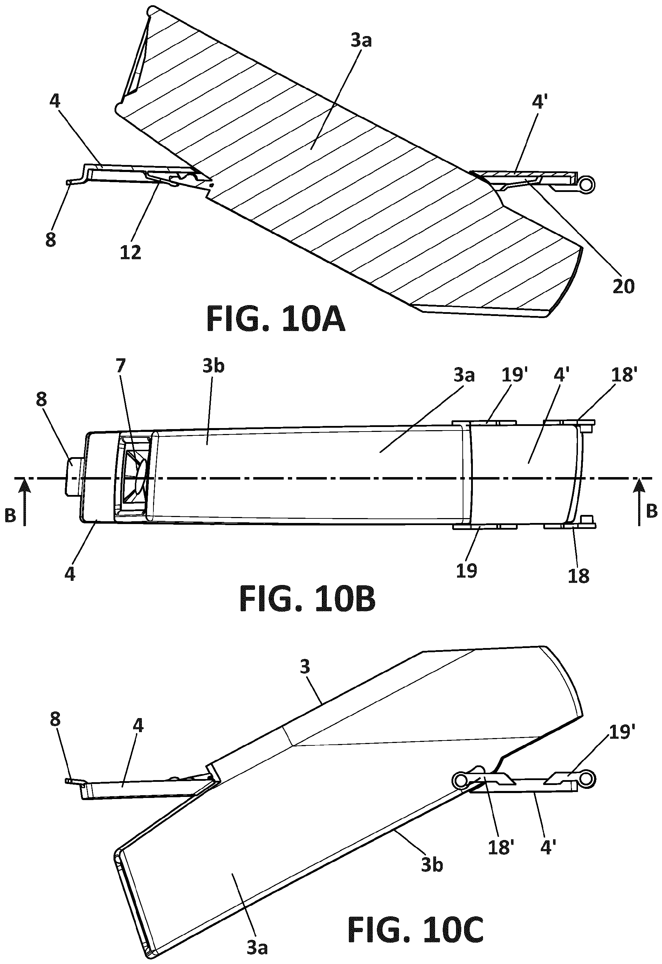

**Figures 8A** to **10D** show a third embodiment of the invention in which the wing assembly (1) in addition to the first cover (4) of the first embodiment, includes a second cover (4') pivotally coupled to the outer or front sides of the casing (3), such that this second cover (4') closes a part of the opening (5) of the receptacle (2) both in the retracted **(****Figure 8B****)** and in the deployed position **(****Figure 8A****),** and it is flush with an outer side of the casing (3), and with an outer surface of a vehicle's bodywork when the wing assembly is installed in a vehicle. In particular, the second cover (4') and the casing (3), are pivotable with respect to each other about an axis (T).

As shown in **Figure 8A****,** the first cover (4) closes a portion of the opening (5) located between the axis (X) and the end (15) of the casing (3) closer to the functional element (7), and the second cover (4') closes another portion of the opening (5) located between the axis (X) and the other end of the casing (3).

Furthermore, the casing (3) has grooves (16, 16') respectively in its upper and lower surfaces (3a, 3c), and the axis (T) passes through these grooves (16, 16'). These grooves (16, 16') provide the required freedom of movement for the second cover (4') with respect to the movement of the casing (3) within the receptacle (2), as shown in **Figures 8A, 8B****.**

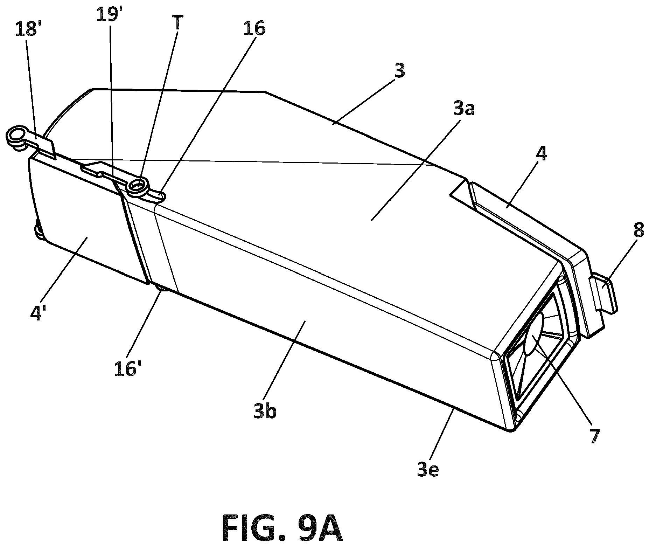

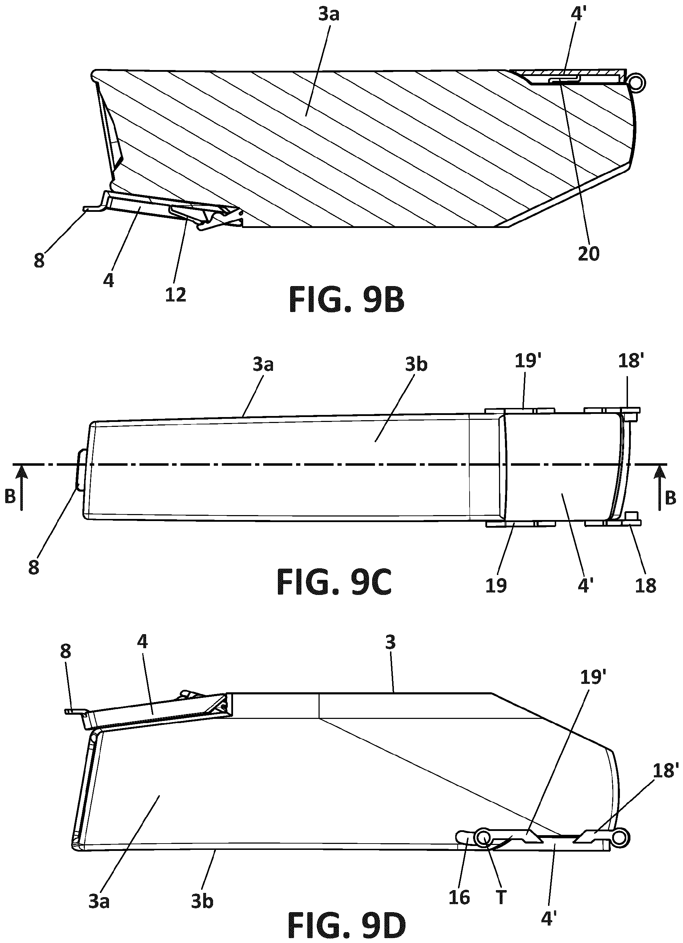

As shown in **Figures 9A** - **9D****,** the second cover (4') follows the outer surface (3b) of the casing (3) in the retracted position.

The second cover (4') is represented with more detail in **Figure 11****.** This second cover (4') has a main body (17) and two pairs of legs (18, 18', 19, 19') projecting in pairs from the main body (17) in opposite directions, such that the free ends of one pair of legs (19, 19') define the previously mentioned axis (T). The other pair of legs (18, 18') serve for coupling the second cover (4') to the receptacle (2). The ends of the second pair of legs (18, 18') define an axis (1') parallel to the axis (T), and the second cover (4') is pivotable with respect to the receptacle (2) about this axis (T').

In a second embodiment of the invention, the wing assembly (1) has only the second cover (4'), and the part of the opening (5) meant to be closed by the first cover (4) in the previous embodiments, may be closed for example by means of a fixed cover (3') or a specific shape of the shell (22) as described in relation to **Figure 1****.**

Furthermore, the second cover (4') has a second flexible tab (20) integrally formed with the second cover (4') in its inner surface, as shown in **Figure 11****,** such that in the retracted position, this second flexible tab (20) is pressed against the casing (3), as shown in **Figure 9B****,** in order to maintain the second cover (4') in its position.

Depending on the position of the pivot axis (X) of the casing (3), there would be one of two openings to be closed. If the pivot axis (X) is located at one end of the casing, there would be only one opening to be closed in the deployed position, whereas if the pivot axis (X) is located in between the two ends of the casing (3), as is the case of the embodiments shown in the figures, there would be two openings to be closed, and the first and second covers (4, 4') as described above, would preferably be used, wherein the first cover (4) is the one closer to the functional device (7).

In a preferred embodiment of the invention, the second cover (4') is additionally configured as an active light, for example as a blinker. In this case, the second cover (4') may have a convex shape, for example shaped as a semi sphere, to be able to house a lighting element and maximise its view in operation when the wing assembly is extended or retracted.

In another preferred embodiment of the invention, the second cover (4') is configured as a light transmitter or image reflector or winglet information, wherein the second cover (4') is used to refract light or an image generated at the front of the winglet. In this case, it would probably be used when the wing assembly is retracted, although it could also be used when it is deployed.

## Claims

1. A retractable wing assembly (1) for vehicles, the retractable wing assembly comprising:
a receptacle (2) having an opening (5) providing access to the receptacle's interior,
a casing (3) fitted with a functional device (7), wherein the casing (3) is assembled with the receptacle (2), and it can move through the opening (5) of the receptacle (2),
wherein the retractable wing assembly (1) is configured such that the casing (3) can reciprocate between a retracted position in which a part of the casing (3) is concealed inside the receptacle (2), and a deployed position in which part of the casing (3), including a part of the functional device (7), is deployed outside the receptacle (2),
**characterized in that**, the retractable wing assembly (1) further comprises at least one cover (4, 4') movably coupled to the casing (3), and wherein the retractable wing assembly (1) is further configured such that in the deployed position, the at least one cover (4, 4') is extended with respect to the casing (3), and the casing (3) together with the at least one cover (4, 4'), closes at least part of the opening (5) of the receptacle (2) to prevent dirt or water from entering into the receptacle (2).

2. A retractable wing assembly (1) according to claim 1, configured such that, in the retracted position a major part of the at least one cover (4, 4') is placed on, over or adjacent to the casing (3), and in the deployed position a major part of the at least one cover (4, 4') is spaced apart from the casing (3).

3. A retractable wing assembly (1) according to claim 1 or 2, wherein the at least one cover (4, 4') is pivotally coupled to the casing (3).

4. A retractable wing assembly (1) according to any of the preceding claims, wherein the receptacle (2) has generally a prismatic rectangular configuration, and wherein the retractable wing assembly (1) is configured such that, in the retracted position, a major part of the at least one cover (4, 4') is placed inside the receptacle (2).

5. A retractable wing assembly (1) according to any of the preceding claims, comprising a first cover (4), and wherein the retractable wing assembly (1) has a first stopper (9) arranged to contact with the first cover (4) when the casing (3) reaches the retracted position, so as to fold the first cover (4) towards the casing (3).

6. A retractable wing assembly (1) according to claim 5, wherein the retractable wing assembly (1) has a second stopper (10) arranged to contact with the first cover (4) when the casing (3) reaches the deployed position, so as to extend the first cover (4) with respect to the casing (3).

7. A retractable wing assembly (1) according to claim 5 or 6, wherein the first and second stoppers (9, 10) are formed in the receptacle (2).

8. A retractable wing assembly (1) according to claim 7, wherein a side surface (2d) of the receptacle (2) has a window (11), and the first and second stoppers (9, 10) are two opposite edges of that window (11), and wherein the first cover (4) or a part of it, it is located inside the window (11) and moves along the window (11), while transiting between the retracted and deployed positions.

9. A retractable wing assembly (1) according to any of the claim 5 to 7, further comprising a flexible member arranged and configured to press the first cover (4), at least in the deployed position.

10. A retractable wing assembly (1) according to any of the preceding claims, comprising a second cover (4') pivotally coupled to the casing (3), such that this second cover (4') closes a part of the opening (5) of the receptacle (2) at least in the deployed position, and it follows an outer surface of the casing (3), and, preferably it also follows an outer surface of a vehicle's bodywork, when the wing assembly is installed in the vehicle.

11. A retractable wing assembly (1) according to claim 10, wherein the second cover (4') is also coupled to the receptacle (2).

12. A retractable wing assembly (1) according to claim 10 or 11, wherein the second cover (4') comprises a second flexible tab (20) configured to be pressed against the casing (3) in the deployed position of the assembly (1).

13. A retractable wing assembly (1) according to any of the preceding claims, wherein the functional device (7) includes at least one device of the following list: a lighting device, a camera, a radar, a lidar, a laser, a sensor, a mirror glass or an antenna.

14. A retractable wing assembly (1) according to any of the preceding claims, wherein the casing (3) is pivotally assembled with the receptacle (2), so that, it can pivot about an axis (X).

15. A retractable wing assembly (1) according to any of the claims 5 to 14, wherein the casing (3) is an elongated body which extends in a direction (R), and the first cover (4) extends in a direction (W), such that, in the deployed position, the direction (W) intersects with the direction (R ) at a point between the axis (X) and a free end (15) of the casing (3), and in the retracted position, the direction (W) does not intersect with the direction (R) at a point between the axis (X) and a free end (15) of the casing (3).
